# EUROPEAN PATENT SPECIFICATION

(11) **EP 2 501 200 B1**
(45) Date of publication and mention of the grant of the patent: **19.02.2020**
(21) Application number: 11305290.6
(22) Date of filing: 16.03.2011
(51) Int. Cl.: H04W 84/00

(54) **METHOD FOR OPERATING A NETWORK NODE IN A VEHICLE, NETWORK NODE AND VEHICLE COMPRISING THE NETWORK NODE THEREOF**
VERFAHREN ZUM BETRIEB EINES NETZWERKKONOTENS IN EINEM FAHRZEUG, NETZWERKKNOTEN UND FAHRZEUG MIT DEM NETZWERKNOTEN
PROCÉDÉ DE FONCTIONNEMENT D'UN NOEUD DE RÉSEAU DANS UN VÉHICULE, NOEUD DE RÉSEAU ET VÉHICULE COMPRENANT LE NOEUD DE RÉSEAU CORRESPONDANT

(43) Date of publication of application: 19.09.2012
(73) Proprietor: Alcatel Lucent, 91620 Nozay (FR)
(72) Inventor: Schaich, Franck, D-704699 Stuttgart (DE); Polatschek, Christian, D-71686 Remseck (DE); Moehlmann, Ulrich, D-90542 Eckental (DE); Moegle, Christian, D-76135 Karlsruhe (DE); Linne, Michael, D-73734 Esslingen (DE); Hantke, Stephanie, D-71634 Ludwigsburg (DE); Grasberger, Martin, D-75443 Oetisheim (DE); Blankenhorn, Jens, D-70435 Stuttgart (DE)
(74) Representative: DREISS Patentanwälte PartG mbB

(56) References cited:
- WO-A1-2009/007778
- FR-A1- 2 947 129
- US-A1- 2002 077 151
- US-A1- 2010 234 071

## Description

The invention relates to a method for operating a network node in a vehicle and, more particularly but not exclusively, to a car comprising the network node.

### BACKGROUND

In the future, it is a main target of automotive manufactures to reduce the overall carbon emission per travelled distance unit (e.g. per kilometre). One part of this reduction besides any improvements of combustion processes within the driving motor is a reduction of heating processes within the passenger cab due to solar radiation. If the heating processes are reduced an operation of an air conditioning unit can be reduced and thereby related energy consumption of the air conditioning unit can be reduced. One possibility to reduce the heating processes is an application of metal coatings such as chrome on window panes of the passenger cab. Such metal coatings on the window panes and the metal material of the car body such as aluminium makes the car becoming a faraday cage blocking effectively radio frequency signals. A direct communication between a mobile unit located within the passenger cab and a base station of a radio communication network outside the passenger cab is nearly impossible or requires an enhancement of transmission power at the mobile unit as well as at the base station. This reduces the operation time at the mobile unit until a next charging process is required and is accompanied with large energy consumption at the mobile unit as well as at the base station. Therefore, a car may be equipped with an external antenna for example mounted on a roof of the car and a transceiver unit connected to the external antenna. The transceiver unit is adapted to receive radio frequency signals from a radio communication network and is adapted to transmit radio frequency signals to the radio communication system. The transceiver unit is further adapted to convert the radio frequency signals into further frequency signals based on a short range radio access technology such as Bluetooth or WLAN. Mobile units located inside the passenger cab can exchange information indirectly with the radio communication network via the short range radio access technology and the transceiver unit of the car. Such a communication technique requires that the mobile unit comprises in addition to a long range radio interface such as UMTS at least one short range radio interface.

Alternatively, the car may be equipped with a GSM or UMTS repeater, the external antenna connected to the GSM or UMTS repeater and an internal antenna located inside the car and connected to the repeater. Radio frequency signals received in downlink direction from a base station at the external antenna are amplified by the repeater and are transmitted via the internal antenna to the mobile unit located inside the car. Even if the external antenna is linear polarized and the internal antenna is circular polarized, interferences between radio frequency signals based on a communication between the base station and the external antenna and radio frequency signals based on a communication between the internal antenna and the mobile unit cannot be fully avoided.

### SUMMARY

The way of operating a network node of a vehicle affects user satisfaction and network coverage of a radio communication network.

Therefore, it is an object of the invention to provide a user-friendly operating method with respect to passengers of a moving vehicle and to reduce network load on wireless interfaces of the radio communication network.

WO 2009/007778 A1 discloses an apparatus and a method for radio coverage of a vehicle, comprising an antenna mounted outside the vehicle, a distributed antenna mounted inside said vehicle, and a repeater device coupling said two antennas.

US 2010/0234071 A1 discloses an example of a vehicle integrated communications system.

The object is achieved by a method as defined in claim 1.

The object is further achieved by a network node as defined in claim 7 and by a vehicle comprising the network node.

The invention provides a first benefit of providing a base station within a passenger cab of a vehicle.

The invention provides a second benefit of not requiring any additional short range radio interfaces at the mobile units and thereby reducing costs (e.g. CAPEX) and energy consumption for the mobile units.

The invention provides a third benefit of requiring no user intervention at the mobile unit, because no additional radio interface needs to be activated at the mobile unit. Thereby, user perception can be improved.

The invention provides a fourth benefit of allowing a handover from a radio cell of a stationary base station of the radio communication network to the radio cell of the network node inside the vehicle, if a passenger gets into the vehicle or handover from the radio cell of the network node to the radio cell of the stationary base station of the radio communication network, if the passenger gets off the vehicle.

The method further comprises the steps of verifying an operation state of the vehicle, and performing the step of operating in the first operation mode if the vehicle is operated by a vehicle driver.

The preferred embodiment allows operating the network node with the operating steps only, if the vehicle is moving around. This allows to reduce the energy consumption and to avoid any unnecessary radiation.

In a further preferred embodiment, the method further comprises the steps of applying first radio frequency signals of a first frequency range between at least one stationary base station of the radio communication network and the first radio interface, and applying second radio frequency signals of a second frequency range separated from the first frequency range between the second radio interface and the at least one mobile unit.

The further preferred embodiment has a benefit of avoiding any interference between the first radio frequency signals and the second radio frequency signals by using different frequency ranges.

In an even further preferred embodiment, the first frequency range is below the second frequency range. This allows the first radio signals to extend a longer distance from the stationary base station to the first radio interface of the network node than the second radio signals, which can be limited to a passenger cab of the vehicle or can be restricted to a limited area around the outside of the vehicle and thereby limit any possible interference with radio frequency signals transmitted directly between stationary base stations and further mobile units to a small restricted area.

In a further preferred embodiment, the first frequency range is below 1 GHz and the second frequency range is above 2 GHz. This large frequency distance provides an even better decoupling between the first radio frequency signals and the second radio frequency signals and should avoid any interference processes. In addition, the second radio frequency signals can be restricted to a small cross sectional area of a few tenfold metre around the vehicle and the first radio signals are able to spread across a cross sectional area of more than one kilometre limiting a number of stationary base stations of the radio communication network to cover a specific area.

Preferably, the first radio frequency signals and/or the second radio frequency signals are transmitted with a MIMO transmission scheme. This provides a high data throughput for all kinds of real time applications such as video download, gaming or video teleconferencing and thereby improves end-user experience.

In a preferred alternative, the second radio interface of the network node is a multi-standard radio interface adapted to provide the radio access technology and at least one further radio access technology. This allows using mobile units belonging to different radio access technologies such as 2G (e.g. GSM, GPRS), 2.5G (e.g. EDGE), 3G (e.g. UMTS), pre-4G (e.g. LTE) or 4G (LTE-Advanced). Thereby, the network node is backward compatible to mobile units from different stages of development.

In a further preferred alternative, the network node further comprises a wireline interface of a wireline access technology and the wireline interface is adapted to provide a data connection towards the radio communication network. This further preferred alternative provides the advantage of offering a further connection type between the network node and the radio communication network in addition to the wireless connection type provided by the first radio interface.

A vehicle comprising the network node, a first antenna system mounted externally to the vehicle and connected to the first radio interface and a second antenna system mounted internally within the vehicle and connected to the second radio interface may be any type of automobile such as a car, a bus or a lorry.

Preferably, the vehicle is adapted to operate the first radio interface with a radio access technology of the radio communication network as a radio interface of a mobile unit and to operate the second radio interface with the radio access technology as a radio interface of a base station of the radio communication network towards the at least one mobile unit located in the vehicle in a first operating mode, if the vehicle is operated by a vehicle driver and the vehicle is adapted to operate the first radio interface and/or said second radio interface as a radio interface of a base station towards the at least one mobile unit in a second operating mode, if the vehicle is parked.

This allows reconfiguring the behaviour of the first and the second radio interface depending on a connection type between the network node and the radio communication network. In the first operating mode, the second radio interface of the network node can be applied as a femtocell for passengers of the vehicle. In the second operating mode, primarily the first radio interface of the network node can be applied as a hotspot for subscribers of the radio communication network staying nearby the parked vehicle. The operator of the radio communication network may offer a discount to the owner of user of the vehicle for offering the vehicle as a hot spot.

In a preferred alternative, the vehicle comprises a port and a data connection between the port and the wireline interface and the first radio interface is adapted to switch from the first operating mode to the second operating mode, if the vehicle is connected via the port and a cable to a fixed backhaul link of the radio communication network.

Preferably, the switching between the first operating mode and the second operating mode is done automatically, when the cable is connected to the port.

In a further preferred alternative, the vehicle is an electric vehicle, the port is integrated to a charging port of the electric vehicle, and the first radio interface is adapted to the switch from the first operating mode to the second operating mode, if the electric vehicle is connected via the charging port to a charging station. Thereby, an operation duration of the electric vehicle as a hot spot can be extended as long as the electric vehicle is parked and connected to the charging port, because the battery of the electric vehicle must not be used for supplying the network node of the electric vehicle with electricity.

Further advantageous features of the invention are defined and are described in the following detailed description of the invention.

### BRIEF DESCRIPTION OF THE FIGURES

The embodiments of the invention will become apparent in the following detailed description and will be illustrated by accompanying figures given by way of non-limiting illustrations.
Figure 1 shows schematically a block diagram of a vehicle comprising a network node, a first radio communication network being in communication with the network node and a second radio communication network being connected with the first radio communication network.
Figure 2 shows schematically a more detailed block diagram of the network node according to the embodiments of the invention.
Figure 3 shows schematically a more detailed block diagram of the vehicle according to a preferred embodiment of the invention.
Figure 4 shows schematically a block diagram of a parking place with vehicles and a charging station according to a further preferred embodiment of the invention.

### DESCRIPTION OF THE EMBODIMENTS

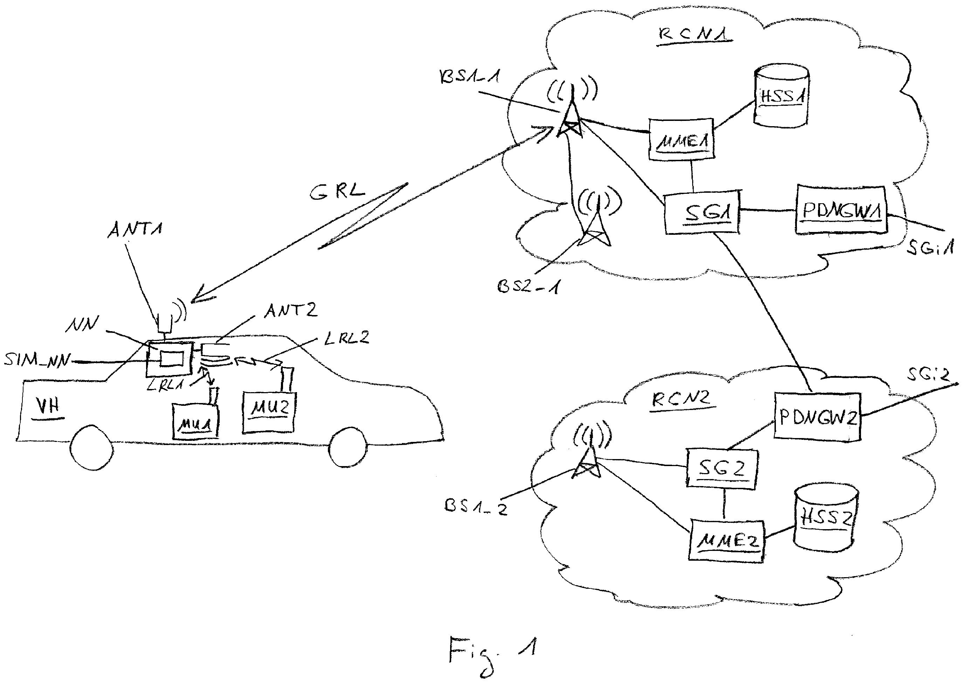

Figure 1 shows on the left-hand side a vehicle VH. Preferably, the vehicle VH may be an automobile such as a car, a lorry or a bus. The vehicle VH is shown in Figure 1 exemplarily as a car. Window panes of the vehicle may be coated with a metal coating such as chrome for reflecting shafts of sunlight and blocking radio frequency signals from the outside to the inside and from the inside to the outside of the vehicle VH.

The vehicle VH comprises a network node NN, which may be located for example below a roof of the vehicle VH. Alternatively, the network node NN may be located for example in a front part or a rear end of the vehicle VH. The network node NN comprises a first radio interface and a second radio interface (not shown in Figure 1 for simplification). A first antenna system ANT1 is mounted externally to an auto body of the vehicle VH preferably at the roof of the vehicle VH and connected to the first radio interface and a second antenna system ANT2 is mounted within the vehicle VH (this means within the internal space formed by the auto body of the vehicle VH) preferably within the passenger cab and more preferably at the roof of the vehicle and connected to the second radio interface.

The network node NN further comprises means for operate the first radio interface RI1 with a radio access technology of a first radio communication network RCN1 with a functionality of a radio interface of a mobile unit. This allows, that the first radio interface is able to set up a global radio link GRL between the vehicle VH and a first base station BS1_1 of the first radio communication network RCN1 similar to a conventional mobile unit directly setting up a radio link to one of the base stations BS1_1, BS2_1 of the first radio communication network RCN1.

Alternatively, the first radio interface may be able to set up the global radio link GRL between the vehicle VH and the first base station BS1_1 of the first radio communication network RCN1 and a further global radio link between the vehicle VH and the second base station BS2_1 of the first radio communication network RCN1 by applying a corporative MIMO transmission mode.

The network node NN further comprises means for operate the second radio interface with the radio access technology of the first radio communication network RCN1 with a functionality of a radio interface of a base station of the first radio communication network RCN1 towards one or several mobile units MU1, MU2. This allows, that a first mobile unit MU1 is able to set up a first local radio link LRL1 to the network node NN and/or that a second mobile unit MU2 is able to set up a second local radio link LRL2 to the network node NN in a same way as setting up directly a radio link to one of the base stations BS1_1, BS2_1 of the first radio communication network RCN1.

The network node NN of the vehicle VH may further comprise a subscriber identity module preferably on a removable SIM card SIM_NN of a first mobile operator of the first radio communication network RCN1.

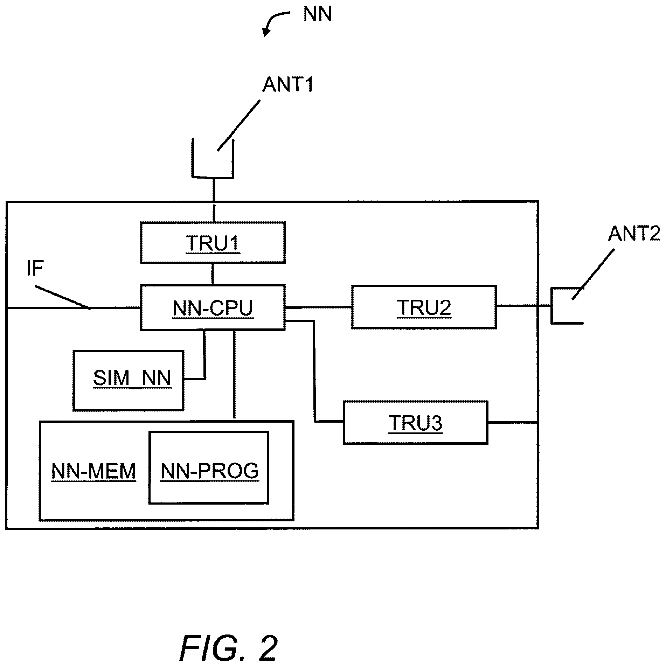

Further details of the network node NN according to further improved embodiments will be explained with respect to Figure 2.

A first user of the first mobile unit MU1 located within the vehicle VH may be a subscriber of the first mobile operator. A second user of the second mobile unit MU2 located within the vehicle VH may be a subscriber of a second mobile operator operating a second radio communication network RCN2.

The first radio communication network RCN1 and the second radio communication network RCN2 may be preferably radio communication networks comprising an LTE network architecture as shown in Figure 1 and providing an OFDM radio access technology.

The base stations BS1_1, BS2_1 of the first radio communication network RCN1 may be operated with first radio frequency signals of a first frequency range at for example around 800 MHz.

Alternatively, one or both of the radio communication networks RCN1, RCN2 may be for example radio communication networks providing a UMTS radio access technology or radio communication networks providing a GSM/GPRS radio access technology.

The network node NN may be switched on and may be switched to a first operating mode preferably in a fully automatic way for example by starting a motor of the vehicle VH. In the first operating mode, the first radio interface is operated with the radio access technology of the first radio communication network RCN1 and with a radio interface functionality of a mobile unit and the second radio interface is operated with the radio access technology and with a radio interface functionality of a base station of the first radio communication network RCN1. Thereby, the second radio interface provides a coverage area for the mobile units MU1, MU2 within the vehicle VH.

For getting the network node NN completely in the first operating mode, in a first phase, the network node NN searches for any base stations BS1_1, BS2_1 of the first radio communication network RCN1. If one of the base stations BS1_1, BS2_1 is in operating distance, the network node NN may perform a conventional registration process of a mobile unit with the first radio communication network RCN1 by using authentication and registration information stored on the SIM card SIM_NN of the network node NN. If the registration is accepted by the first radio communication network RCN1, the second radio interface of the network node NN may be configured with operator specific configuration parameters such as operating frequency range (for example at 2.6 GHz), maximum power level, cell id, paging area etc. either by self configuration (e.g. applying parameters, which are stored on the SIM card SIM_NN) or by receiving the parameters via the global radio link GRL from the first radio communication network RCN1.

Preferably, the first radio frequency signals between the stationary base stations BS1_1, BS2_1 of the first radio communication network RCN1 and the first radio interface are in a first frequency range below 1 GHz and second frequency signals between the second radio interface and the mobile units MU1, MU2 are in a second frequency range above 2 GHz. In a further alternative, the first frequency range may be below 2 GHz and the second frequency range may be above 2 GHz depending on a national regulation of frequency ranges.

After finishing the configuration, the network node NN operates the first radio interface with the radio interface functionality of a mobile unit towards the first base station BS1_1 and operates the second radio interface with the radio interface functionality of a base station towards the mobile units MU1, MU2 and thereby providing a coverage area within the vehicle VH.

The network node NN may fall in a sleep mode after finishing the configuration. During the sleep mode the network node NN may transmit location updates to the first radio communication network RCN1, if a timer has expired or if the vehicle VH has been moved to a new location area with a new location ID.

Alternatively, the network node NN may keep a radio access bearer with a small data rate as long as no user data traffic needs to be transmitted from/to the mobile units MU1, MU2. The small data rate may be sufficient for tunnelling paging messages to the mobile units MU1, MU2 by using for example Generic Routing Encapsulation GRE between the radio communication network RCN1 and the mobile units MU1, MU2 and for tunnelling location updates or service requests from the mobile units MU1, MU2 to the first radio communication network RCN1.

In a further alternative, the network node NN may keep a radio access bearer with a larger data rate capable to transmit several services of the mobile units MU1, MU2 such a web browsing, email and telephone call. In that case, a data rate of the radio access bearer must not be changed for every change of active services of the mobile units MU1, MU2.

If the first mobile unit MU1 is switched on within the vehicle VH, the first mobile unit MU1 may not receive the first radio signals directly from the base stations BS1_1, BS2_1 due to a faraday cage effect of the auto body of the vehicle VH and due to the coated window panes blocking effectively radio frequency signals. Instead, the first mobile unit MU1 is able to receive the second radio signals from the second radio interface of the network node NN. This allows the first mobile unit MU1 to trigger via the first local radio link LRL1, the network node NN and the global radio link GRL an exchange of conventional authentication and registration messages between a first home subscriber server HSS1 of the first radio communication network RCN1, a first mobility management entity MME1 of the first radio communication network RCN1 and the first mobile unit MU1. After successful authentication and registration of the first mobile unit MU1, a first service request at the first mobile unit MU1 may trigger to increase the data rate of the global radio link GRL. After accepting the first service request, first user data are transmitted in downlink and/or uplink direction via the first local radio link LRL1, the network node NN, the global radio link GRL, the first base station BS1_1, a first serving gateway SG1 of the first radio communication network RCN1, a first packet data network gateway PDNGW1 of the first radio communication network RCN1 and for example a first Internet interface SGi1 between the first packet data network gateway PDNGW1 and the Internet.

A national roaming agreement between the first mobile operator of the first radio communication network RCN1 and the second mobile operator of the second radio communication network RCN2 may allow, that subscribers of the second mobile operator are allowed to roam in the first radio communication network RCN1 of the first mobile operator. In such a case, if the second mobile unit MU2 is switched on within the vehicle VH, the second mobile unit MU2 may not receive the radio signals directly from a first base station BS1_2 of the second radio communication network RCN2 due to the faraday cage effect of the auto body of the vehicle VH and due to the coated window panes blocking effectively radio frequency signals. Instead, the second mobile unit MU2 may receive the second radio signals from the second radio interface of the network node NN. Therefore, the second mobile unit MU2 may trigger via the second local radio link LRL2, the network node NN and the global radio link GRL an exchange of conventional authentication and registration messages between a second home subscriber server HSS2 of the second radio communication network RCN2, the first mobility management entity MME1 of the first radio communication network RCN1 and the second mobile unit MU2. The second home subscriber server HSS2 may be connected to a second mobility management entity MME2 of the second radio communication network RCN2 and the second mobility management entity MME2 may be connected to the first base station BS1_2 of the second radio communication network RCN2 and to a second serving gateway SG2 of the second radio communication network RCN2. The second serving gateway SG2 may be connected to the first base station BS1_2 of the second radio communication network RCN2 and to a second packet data network gateway PDNGW2 of the second radio communication network RCN2.

After successful authentication and registration of the second mobile unit MU2, a second service request at the second mobile unit MU2 may trigger to further increase the data rate of the global radio link GRL. After accepting the second service request, second user data may be transmitted in downlink and/or uplink direction via the second local radio link LRL2, the network node NN, the global radio link GRL, the first base station BS1_1, the first serving gateway SG1 of the first radio communication network RCN1, the second packet data network gateway PDNGW2 of the second radio communication network RCN2 and for example a second Internet interface SGi2 between the second packet data network gateway PDNGW2 and the Internet.

If the vehicle VH moves from a coverage area of the first base station BS1_1 of the first radio communication network RCN1 to a coverage area of the second base station BS2_1 of the first radio communication network RCN1 and handover for the global radio link GRL may be performed from the first base station BS1_1 to the second base station BS2_1 of the first radio communication network RCN1 in a same way as a conventional mobile unit performing a handover from the first base station BS1_1 to the second base station BS2_1 of the first radio communication network RCN1.

Referring to Figure 2 the network node NN may comprise the first radio interface TRU1 as a first transceiver unit, the second radio interface as a second transceiver unit, the SIM card SIM_NN, a central processing unit NN-CPU and a computer readable medium NN-MEM. The central processing unit NN-CPU is foreseen for executing a computer readable program NN-PROG. The computer readable medium NN-MEM is foreseen for storing the computer readable program NN-PROG. The computer readable program NN-PROG is foreseen for operating the network node NN according to the embodiments of the invention. In particular, the computer readable program NN-PROG may be capable to verify an operation state of the vehicle VH and operating the network node NN depending on the operation state of the vehicle VH. Preferably, the central processing unit NN-CPU may comprise an interface IF to an onboard computer system of the vehicle VH. By exchanging information with the onboard computer system of the vehicle VH via the interface IF, the central processing unit NN-CPU may verify for example, if the vehicle VH is operated by a vehicle driver or if the vehicle VH is parked.

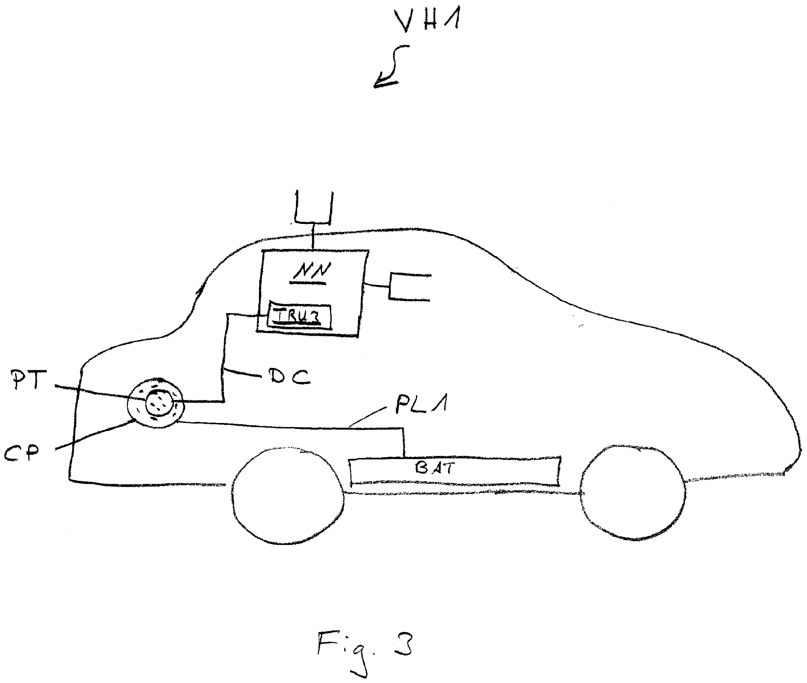

The first antenna system ANT1 may comprise a single antenna element or two or more antenna elements. Similarly, the second antenna system ANT2 may comprise a single antenna element or two or more antenna elements. The first and the second antenna system ANT1, ANT2 can be connected to ports of the network node NN and may be not an integral part of the network node NN (even if shown in Figure 3 as parts of the network node NN).

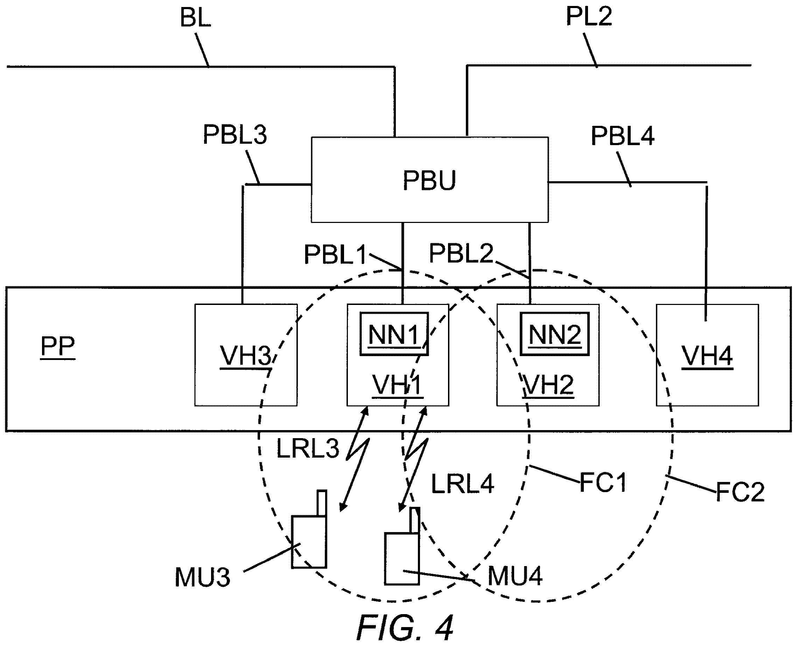

The first transceiver unit TRU1 may be a reconfigurable transceiver unit. This means, that the first transceiver unit TRU1 may be configured to operate as a radio interface of a conventional mobile unit in the first operating mode for connecting and setting up the global radio link GRL to one or several of the base stations BS1_1, BS2_1 of the first radio communication network RCN1 or to operate as a radio interface of a base station in the second operating mode for providing a coverage area outside the vehicle VH (see Figure 4).

Preferably, an operating frequency range of the first radio interface TRU1 is aligned (e.g. to 2.6 GHz) to an operating frequency range of the second radio interface TRU2, if the first radio interface TRU1 is operated in the second operating mode. This means, that the first radio interface TRU1 may operate as an external femtocell and that the second radio interface TRU2 may operate in parallel as an internal femtocell, if the network node NN is build into the vehicle.

A reconfiguration of the first transceiver unit TRU1 or a switching of the first transceiver unit TRU1 from the first operation mode to the second operation mode and vice versa may be controlled by the central processing unit NN-CPU.

The second transceiver unit TRU2 may be a single-standard radio interface or a multi-standard radio interface adapted to provide two or more radio access technologies such as LTE, UMTS and/or GSM/GPRS. A reconfiguration of the second transceiver unit TRU2 between the different radio access technologies may be controlled by the central processing unit NN-CPU.

Preferably, the network node NN further comprises a wireline interface TRU3 of a wireline access technology such as DSL. The wireline interface TRU3 is adapted to provide a data connection towards the first radio communication network RCN1 via a backhaul link.

Figure 3 shows a vehicle VH1 according to a preferred embodiment of the invention. The vehicle VH1 comprises a port PT and a data connection DC between the port PT and the wireline interface TRU3 of the network node NN. A cable of a backhaul link of the first radio communication network RCN1 may be connected to the port PT. If it is detected for example by the central processing unit NN-CPU that the cable of the backhaul link is connected to the port PT, the vehicle VH may be switched for example by the central processing unit NN-CPU from the first operating mode to the second operating mode using a reconfiguration of the first radio interface TRU1. In the second operating mode, only the first radio interface TRU1 may operate as a hotspot for mobile units located outside the vehicle VH1 or both, the first radio interface TRU1 and the second radio interface TRU2 may operate as a femtocell for mobile units located inside the vehicle VH1. If it is detected for example by the central processing unit NN-CPU that the cable of the backhaul link is disconnected from the port PT, the vehicle VH1 may be switched from the second operating mode to the first operating mode.

In a preferred alternative, the vehicle VH1 may be an electric vehicle and the port PT may be integrated to a charging port CP of the electric vehicle. The charging port CP may be connected via a power line PL1 to a rechargeable battery BAT.

If it is detected for example by the central processing unit NN-CPU that the electric vehicle VH1 is connected via the charging port CP to a charging station, the electric vehicle VH1 may be switched from the first operating mode to the second operating mode. If it is detected for example by the central processing unit NN-CPU that the electric vehicle VH1 is disconnected from the charging station, the electric vehicle VH1 may be switched from the second operating mode to the first operating mode.

Figure 4 shows a parking place PP, which may be crowded by a lot of mobile users exemplarily pictured by a third mobile unit MU3 and a fourth mobile unit MU4. Vehicles VH1, VH2, VH3, VH4 such as electric cars are parked on the parking place PP. The parking place PP comprises a charging station PBU for charging rechargeable batteries of the electric cars VH1, VH2, VH3, VH4. A first electric car VH1 is connected by a first power and backhaul line PBL1 to the charging station PBU, a second electric car VH2 is connected by a second power and backhaul line PBL2 to the charging station PBU, a third electric car VH3 is connected by a third power and backhaul line PBL3 to the charging station PBU, and a fourth electric car VH4 is connected by a fourth power and backhaul line PBL4 to the charging station PBU.

The power and backhaul lines PBL1, PBL2, PBL3, PBL4 comprise cables for providing electricity to the rechargeable batteries of the electric cars VH1, VH2, VH3, VH4 and comprises cables or optical fibres for providing a data connection to network nodes of the electric cars VH1, VH2, VH3, VH4. A power line PL2 from a local electricity supplier is connected to the charging station PBU and a backhaul line BL from a radio communication network is connected to the charging station PBU. The charging station PBU splits the power line PL2 and the backhaul line BL into the power and backhaul lines PBL1, PBL2, PBL3, PBL4.

As exemplarily shown in Figure 2, the first electric car VH1 comprises a network node NN1. By connecting the first electric car VH1 via the charging port CP and the first power and backhaul line PBL1 to the charging station PBU, the first radio interface RI1 switches preferably automatically from the first operating mode to the second operating mode. Thereby, the network node NN1 is able to provide via the first radio interface RI1 a first femtocell FC1 at the outside of the first electric car VH1. If the first power and backhaul line PBL1 is disconnected from the charging port CP, the first radio interface RI1 switches preferably automatically from the second operating mode to the first operating mode.

In such a case, the third mobile unit MU3 and the fourth mobile unit MU4 may perform a handover to a second femtocell FC2 of the second electric car VH2 comprising a network node NN2 or to a global radio cell of one of the stationary base stations BS1_1, BS2_1 of the first radio communication network RCN1.

## Claims

1. Method for operating a network node (NN) in a vehicle (VH, VH1), the method comprising the steps of: - in a first operation mode operating a first radio interface (TRU1) of said network node (NN), wherein said first radio interface is a first transceiver unit, with a radio access technology of a radio communication network (RCN1) and as a radio interface of a mobile unit and operating a second radio interface (TRU2) of said network node (NN), wherein said second radio interface is a second transceiver unit, with said radio access technology and as a radio interface of a base station of said radio communication network (RCN1) towards at least one mobile unit (MU1, MU2) located within the vehicle (VH, VH1), if said vehicle (VH1) is operated by a vehicle driver, wherein first user data are transmitted in downlink and/or uplink direction between said at least one mobile unit (MU1, MU2) and a base station (BS1_1) of said radio communication network (RCN1) via a first local radio link (LRL1) between said at least one mobile unit (MU1, MU2) and said second radio interface (TRU2) of said network node (NN) and a global radio link (GRL) between said first radio interface (TRU1) of said network node (NN) and said base station (BS1_1) of said radio communication network (RCN1), so that the second radio interface (TRU2) provides a coverage area associated with said radio communication network (RCN1) for the mobile units (MU1, MU2) within the vehicle (VH), and - in a second operating mode operating said first radio interface (TRU1), or said first radio interface (TRU1) and said second radio interface (TRU2), as a radio interface of a base station towards at least one mobile unit (MU3, MU4), if said vehicle (VH1) is parked.

2. Method according to claim 1, wherein said method further comprises the steps of: - verifying an operation state of said vehicle (VH, VH1), and - performing the step of operating in the first operation mode if said vehicle (VH, VH1) is operated by a vehicle driver.

3. Method according to any of the preceding claims, wherein said method further comprises the steps of: - applying first radio frequency signals of a first frequency range between at least one stationary base station (BS1_1, BS2_1) of said radio communication network (RCN1) and said first radio interface (TRU1), and - applying second radio frequency signals of a second frequency range separated from said first frequency range between said second radio interface (TRU2) and said at least one mobile unit (MU1, MU2).

4. Method according to claim 3, wherein said first frequency range is below said second frequency range.

5. Method according to claim 4, wherein said first frequency range is below 1 GHz and wherein said second frequency range is above 2 GHz.

6. Method according to any of the preceding claims, wherein said first radio frequency signals and/or said second radio frequency signals are transmitted with a MIMO transmission scheme.

7. Network node (NN) for use in a radio communication network (RCN1) and for operation in a vehicle (VH, VH1), said network node (NN) comprises: - a first radio interface, wherein said first radio interface is a first transceiver unit (TRU1), - a second radio interface, wherein said second radio interface is a second transceiver unit (TRU2),-means (NN-CPU, NN-PROG) for operating in a first operation mode said first radio interface (TRU1) with a radio access technology of a radio communication network (RCN1) and as a radio interface of a mobile unit and said second radio interface (TRU2) with said radio access technology and as a radio interface of a base station of said radio communication network (RCN1) towards at least one mobile unit (MU1, MU2) located within the vehicle (VH, VH1), if said vehicle (VH1) is operated by a vehicle driver, wherein said network node (NN) is configured to transmit first user data in downlink and/or uplink direction between said at least one mobile unit (MU1, MU2) and a base station (BS1_1) of said radio communication network (RCN1) via a first local radio link (LRL1) between said at least one mobile unit (MU1, MU2) and said second radio interface (TRU2) of said network node (NN) and a global radio link (GRL) between said first radio interface (TRU1) of said network node (NN) and said base station (BS1_1) of said radio communication network (RCN1), so that the second radio interface (TRU2) provides a coverage area associated with said radio communication network (RCN1) for the mobile units MU1, MU2 within the vehicle VH, and for operating in a second operating mode said first radio interface (TRU1), or said first radio interface (TRU1) and said second radio interface (TRU2), as a radio interface of a base station towards at least one mobile unit (MU3, MU4), if said vehicle (VH1) is parked.

8. Network node (NN) according to claim 7, wherein said second radio interface (TRU2) is a multi-standard radio interface adapted to provide said radio access technology and at least one further radio access technology.

9. Network node (NN) according to any of the preceding claims 7, 8, wherein said network node (NN) further comprises a wireline interface (TRU3) of a wireline access technology and wherein said wireline interface (TRU3) is adapted to provide a data connection towards said radio communication network (RCN1).

10. A vehicle (VH, VH1) comprising a network node (NN) according to any of the preceding claims 7 to 9, a first antenna (ANT1) mounted externally to said vehicle (VH, VH1) and connected to said first radio interface (TRU1) and a second antenna (ANT2) mounted internally within said vehicle (VH, VH1) and connected to said second radio interface (TRU2).

11. Vehicle (VH1) according to claim 10, wherein said vehicle (VH1) comprises a port (PT) and a data connection (DC) between said port (PT) and said wireline interface (TRU3) and wherein said first radio interface (TRU1) is adapted to switch from said first operating mode to said second operating mode, if said vehicle (VH1) is connected via said port (PT) to a backhaul link (BL) of said radio communication network (RCN1).

12. Vehicle (VH1) according to claim 11, wherein said vehicle (VH1) is an electric vehicle, wherein said port (PT) is integrated to a charging port (CP) of said electric vehicle, and wherein said first radio interface (TRU1) is adapted to said switch from said first operating mode to said second operating mode, if said electric vehicle is connected via said charging port (CP) to a charging station (PBU).

13. Vehicle (VH, VH1) according to any of the claims 9 to 12, wherein said vehicle (VH, VH1) is an automobile.

14. Vehicle (VH, VH1) according to claim 13, wherein said automobile is a car, a bus or a lorry.

## Patentansprüche

1. Verfahren zum Betrieb eines Netzwerkknotens (NN) in einem Fahrzeug (VH, VH1), wobei das Verfahren die Schritte umfasst: - in einem ersten Betriebsmodus, Betreiben einer ersten Funkschnittstelle (TRU1) des Netzwerkknotens (NN), wobei die erste Funkschnittstelle eine erste Sendeempfängereinheit ist, mit einer Funkzugangstechnologie eines Funkkommunikationsnetzwerks (RCN1) und als eine Funkschnittstelle einer mobilen Einheit, und Betreiben einer zweiten Funkschnittstelle (TRU2) des Netzknotens (NN), wobei die zweite Funkschnittstelle eine zweite Sendeempfängereinheit ist, mit der Funkzugangstechnologie und als eine Funkschnittstelle einer Basisstation des Funkkommunikationsnetzwerks (RCN1) zu mindestens einer in dem Fahrzeug (VH, VH1) befindlichen mobilen Einheit (MU1, MU2), falls das Fahrzeug (VH1) von einem Fahrzeugführer betrieben wird, wobei erste Benutzerdaten in Abwärtstrecken- und/oder Aufwärtsstreckenrichtung zwischen der mindestens einen mobilen Einheit (MU1, MU2) und einer Basisstation (BS1_1) des Funkkommunikationsnetzwerks (RCN1) über eine erste lokale Funkverbindung (LRL1) zwischen der mindestens einen mobilen Einheit (MU1, MU2) und der zweiten Funkschnittstelle (TRU2) des Netzwerkknotens (NN) und eine globale Funkverbindung (GRL) zwischen der ersten Funkschnittstelle (TRU1) des Netzwerkknotens (NN) und der Basisstation (BS1_1) des Funkkommunikationsnetzwerks (RCN1) übertragen werden, so dass die zweite Funkschnittstelle (TRU2) einen Versorgungsbereich bereitstellt, der dem Funkkommunikationsnetzwerk (RCN1) für die mobilen Einheiten (MU1, MU2) innerhalb des Fahrzeugs (VH) zugeordnet ist, und - in einem zweiten Betriebsmodus, Betreiben der ersten Funkschnittstelle (TRU1), oder der ersten Funkschnittstelle (TRU1) und der zweiten Funkschnittstelle (TRU2), als Funkschnittstelle einer Basisstation zu mindestens einer mobilen Einheit (MU3, MU4), falls das Fahrzeug (VH1) geparkt ist.

2. Verfahren nach Anspruch 1, wobei das Verfahren ferner die Schritte umfasst: - Verifizieren eines Betriebszustands des Fahrzeugs (VH, VH1), und - Durchführen des Schritts des Betreibens in dem ersten Betriebsmodus, falls das Fahrzeug (VH, VH1) von einem Fahrzeugführer betrieben wird.

3. Verfahren nach einem der vorhergehenden Ansprüche, wobei das Verfahren ferner die Schritte umfasst:-Anwenden von ersten Hochfrequenzsignalen eines ersten Frequenzbereichs zwischen mindestens einer stationären Basisstation (BS1_1, BS2_1) des Funkkommunikationsnetzwerks (RCN1) und der ersten Funkschnittstelle (TRU1) und - Anwenden von zweiten Hochfrequenzsignalen eines von dem ersten Frequenzbereich getrennten zweiten Frequenzbereichs zwischen der zweiten Funkschnittstelle (TRU2) und der mindestens einen mobilen Einheit (MU1, MU2) .

4. Verfahren nach Anspruch 3, wobei der erste Frequenzbereich unterhalb des zweiten Frequenzbereichs liegt.

5. Verfahren nach Anspruch 4, wobei der erste Frequenzbereich unterhalb 1 GHz liegt, und wobei der zweite Frequenzbereich oberhalb 2 GHz liegt.

6. Verfahren nach einem der vorhergehenden Ansprüche, wobei die ersten Hochfrequenzsignale und/oder die zweiten Hochfrequenzsignale mit einem MIMO-Übertragungsschema übertragen werden.

7. Netzwerkknoten (NN) zur Verwendung in einem Funkkommunikationsnetzwerk (RCN1) und zum Betrieb in einem Fahrzeug (VH, VH1), wobei der Netzwerkknoten (NN) umfasst: - eine erste Funkschnittstelle, wobei die erste Funkschnittstelle eine erste Sendeempfängereinheit (TRU1) ist, - eine zweite Funkschnittstelle, wobei die zweite Funkschnittstelle eine zweite Sendeempfängereinheit (TRU2) ist, - Mittel (NN-CPU, NN-PROG) zum Betreiben, in einem ersten Betriebsmodus (TRU1), der ersten Funkschnittstelle mit einer Funkzugangstechnologie eines Funkkommunikationsnetzwerks (RCN1) und als Funkschnittstelle einer mobilen Einheit, und der zweiten Funkschnittstelle (TRU2) mit der Funkzugangstechnologie und als Funkschnittstelle einer Basisstation des Funkkommunikationsnetzwerks (RCN1) zu mindestens einer innerhalb des Fahrzeugs (VH, VH1) befindlichen mobilen Einheit (MU1, MU2), falls das Fahrzeug (VH1) von einem Fahrzeugführer betrieben wird, wobei der Netzwerkknoten (NN) konfiguriert ist, erste Benutzerdaten in Abwärtsstrecken- und/oder Aufwärtsstreckenrichtung zwischen der mindestens einen mobilen Einheit (MU1, MU2) und einer Basisstation (BS1_1) des Funkkommunikationsnetzwerks (RCN1) über eine erste lokale Funkverbindung (LRL1) zwischen der mindestens einen mobilen Einheit (MU1, MU2) und der zweiten Funkschnittstelle (TRU2) des Netzwerkknotens (NN) und eine globale Funkverbindung (GRL) zwischen der ersten Funkschnittstelle (TRU1) des Netzwerkknotens (NN) und der Basisstation (BS1_1) des Funkkommunikationsnetzwerks (RCN1) zu übertragen, so dass die zweite Funkschnittstelle (TRU2) ein Versorgungsgebiet bereitstellt, das dem Funkkommunikationsnetzwerk (RCN1) für die mobilen Einheiten MU1, MU2 innerhalb des Fahrzeugs VH zugeordnet ist, und zum Betreiben, in einem zweiten Betriebsmodus, der ersten Funkschnittstelle (TRU1), oder der ersten Funkschnittstelle (TRU1) und der zweiten Funkschnittstelle (TRU2), als Funkschnittstelle einer Basisstation zu mindestens einer mobilen Einheit (MU3, MU4), falls das Fahrzeug (VH1) geparkt ist.

8. Netzwerkknoten (NN) nach Anspruch 7, wobei die zweite Funkschnittstelle (TRU2) eine Mehrstandard-Funkschnittstelle ist, die eingerichtet ist, die Funkzugangstechnologie und mindestens eine weitere Funkzugangstechnologie bereitzustellen.

9. Netzwerkknoten (NN) nach einem der vorhergehenden Ansprüche 7, 8, wobei der Netzwerkknoten (NN) ferner eine drahtgebundene Schnittstelle (TRU3) einer drahtgebundenen Zugangstechnologie umfasst, und wobei die drahtgebundene Schnittstelle (TRU3) eingerichtet ist, eine Datenverbindung zu dem Funkkommunikationsnetzwerk (RCN1) bereitzustellen.

10. Fahrzeug (VH, VH1), umfassend einen Netzwerkknoten (NN) nach einem der vorhergehenden Ansprüche 7 bis 9, eine erste Antenne (ANT1), die extern an dem Fahrzeug (VH, VH1) angebracht ist und mit der ersten Funkschnittstelle (TRU1) verbunden ist, und eine zweite Antenne (ANT2), die innerhalb des Fahrzeugs (VH, VH1) angebracht ist und mit der zweiten Funkschnittstelle (TRU2) verbunden ist.

11. Fahrzeug (VH1) nach Anspruch 10, wobei das Fahrzeug (VH1) einen Anschluss (PT) und eine Datenverbindung (DC) zwischen dem Anschluss (PT) und der drahtgebundenen Schnittstelle (TRU3) umfasst, und wobei die erste Funkschnittstelle (TRU1) eingerichtet ist, von dem ersten Betriebsmodus in den zweiten Betriebsmodus umzuschalten, falls das Fahrzeug (VH1) über den Anschluss (PT) mit einer Backhaul-Verbindung (BL) des Funkkommunikationsnetzwerks (RCN1) verbunden wird.

12. Fahrzeug (VH1) nach Anspruch 11, wobei das Fahrzeug (VH1) ein Elektrofahrzeug ist, wobei der Anschluss (PT) in einen Ladeanschluss (CP) des Elektrofahrzeugs integriert ist, und wobei die erste Funkschnittstelle (TRU1) eingerichtet ist, von dem ersten Betriebsmodus in den zweiten Betriebsmodus umzuschalten, falls das Elektrofahrzeug über den Ladeanschluss (CP) mit einer Ladestation (PBU) verbunden wird.

13. Fahrzeug (VH, VH1) nach einem der Ansprüche 9 bis 12, wobei das Fahrzeug (VH, VH1) ein Automobil ist.

14. Fahrzeug (VH, VH1) nach Anspruch 13, wobei das Automobil ein Personenkraftwagen, ein Bus oder ein Lastkraftwagen ist.

## Revendications

1. Procédé de fonctionnement d'un nœud de réseau (NN) dans un véhicule (VH, VH1), le procédé comprenant les étapes suivantes : - dans un premier mode de fonctionnement, faire fonctionner une première interface radio (TRU1) dudit nœud de réseau (NN), dans lequel ladite première interface radio est une première unité d'émission-réception, avec une technologie d'accès radio d'un réseau de radiocommunication (RCN1) et en tant qu'interface radio d'une unité mobile et faire fonctionner une seconde interface radio (TRU2) dudit nœud de réseau (NN), dans lequel ladite seconde interface radio est une seconde unité d'émission-réception, avec ladite technologie d'accès radio et en tant qu'interface radio d'une station de base dudit réseau de radiocommunication (RCN1) vers au moins une unité mobile (MU1, MU2) située à l'intérieur du véhicule (VH, VH1), si ledit véhicule (VH1) est conduit par un conducteur de véhicule, dans lequel des premières données d'utilisateur sont émises dans la direction de liaison descendante et/ou de liaison montante entre ladite au moins une unité mobile (MU1, MU2) et une station de base (BS1_1) dudit réseau de radiocommunication (RCN1) par l'intermédiaire d'une première liaison radio locale (LRL1) entre ladite au moins une unité mobile (MU1, MU2) et ladite seconde interface radio (TRU2) dudit nœud de réseau (NN) et d'une liaison radio globale (GRL) entre ladite première interface radio (TRU1) dudit nœud de réseau (NN) et ladite station de base (BS1_1) dudit réseau de radiocommunication (RCN1), de sorte que la seconde interface radio (TRU2) fournit une zone de couverture associée audit réseau de radiocommunication (RCN1) pour les unités mobiles (MU1, MU2) à l'intérieur du véhicule (VH), et - dans un second mode de fonctionnement, faire fonctionner ladite première interface radio (TRU1), ou ladite première interface radio (TRU1) et ladite seconde interface radio (TRU2), en tant qu'interface radio d'une station de base vers au moins une unité mobile (MU3, MU4), si ledit véhicule (VH1) est stationné.

2. Procédé selon la revendication 1, dans lequel ledit procédé comprend en outre les étapes suivantes : - vérifier un état de fonctionnement dudit véhicule (VH, VH1), et - exécuter l'étape de fonctionnement dans le premier mode de fonctionnement si ledit véhicule (VH, VH1) est conduit par un conducteur de véhicule.

3. Procédé selon l'une quelconque des revendications précédentes, dans lequel ledit procédé comprend en outre les étapes suivantes : - appliquer des premiers signaux de fréquence radio d'une première plage de fréquences entre au moins une station de base fixe (BS1_1, BS2_1) dudit réseau de communication radio (RCN1) et ladite première interface radio (TRU1), et - appliquer des seconds signaux de fréquence radio d'une seconde plage de fréquences séparée de ladite première plage de fréquences entre ladite seconde interface radio (TRU2) et ladite au moins une unité mobile (MU1, MU2).

4. Procédé selon la revendication 3, dans lequel ladite première plage de fréquences est inférieure à ladite seconde plage de fréquences.

5. Procédé selon la revendication 4, dans lequel ladite première plage de fréquences est inférieure à 1 GHz et dans lequel ladite seconde plage de fréquences est supérieure à 2 GHz.

6. Procédé selon l'une quelconque des revendications précédentes, dans lequel lesdits premiers signaux de fréquence radio et/ou lesdits seconds signaux de fréquence radio sont émis selon un schéma d'émission MIMO.

7. Nœud de réseau (NN) destiné à être utilisé dans un réseau de radiocommunication (RCN1) et à fonctionner dans un véhicule (VH, VH1), ledit nœud de réseau (NN) comprenant : - une première interface radio, dans lequel ladite première interface radio est une première unité d'émission-réception (TRU1), - une seconde interface radio, dans lequel ladite seconde interface radio est une seconde unité d'émission-réception (TRU2), - un moyen (NN-CPU, NN-PROG) pour faire fonctionner dans un premier mode de fonctionnement ladite première interface radio (TRU1) avec une technologie d'accès radio d'un réseau de radiocommunication (RCN1) et en tant qu'interface radio d'une unité mobile et ladite seconde interface radio (TRU2) avec ladite technologie d'accès radio et en tant qu'interface radio d'une station de base dudit réseau de radiocommunication (RCN1) vers au moins une unité mobile (MU1, MU2) située à l'intérieur du véhicule (VH, VH1), si ledit véhicule (VH1) est conduit par un conducteur de véhicule, dans lequel ledit nœud de réseau (NN) est configuré pour émettre des premières données d'utilisateur dans la direction de liaison descendante et/ou de liaison montante entre ladite au moins une unité mobile (MU1, MU2) et une station de base (BS1_1) dudit réseau de radiocommunication (RCN1) par l'intermédiaire d'une première liaison radio locale (LRL1) entre ladite au moins une unité mobile (MU1, MU2) et ladite seconde interface radio (TRU2) dudit nœud de réseau (NN) et une liaison radio globale (GRL) entre ladite première interface radio (TRU1) dudit nœud de réseau (NN) et ladite station de base (BS1_1) dudit réseau de radiocommunication (RCN1), de sorte que la seconde interface radio (TRU2) fournit une zone de couverture associée audit réseau de radiocommunication (RCN1) pour les unités mobiles MU1, MU2 à l'intérieur du véhicule VH, et pour faire fonctionner dans un second mode de fonctionnement ladite première interface radio (TRU1), ou ladite première interface radio (TRU1) et ladite seconde interface radio (TRU2), en tant qu'interface radio d'une station de base vers au moins une unité mobile (MU3, MU4), si ledit véhicule (VH1) est stationné.

8. Nœud de réseau (NN) selon la revendication 7, dans lequel ladite seconde interface radio (TRU2) est une interface radio multinormes conçue pour fournir ladite technologie d'accès radio et au moins une autre technologie d'accès radio.

9. Nœud de réseau (NN) selon l'une quelconque des revendications 7, 8 précédentes, dans lequel ledit nœud de réseau (NN) comprend en outre une interface filaire (TRU3) d'une technologie d'accès filaire et dans lequel ladite interface filaire (TRU3) est conçue pour fournir une connexion de données vers ledit réseau de radiocommunication (RCN1).

10. Véhicule (VH, VH1) comprenant un nœud de réseau (NN) selon l'une quelconque des revendications 7 à 9 précédentes, une première antenne (ANT1) montée à l'extérieur dudit véhicule (VH, VH1) et connectée à ladite première interface radio (TRU1) et une seconde antenne (ANT2) montée à l'intérieur dudit véhicule (VH, VH1) et connectée à ladite seconde interface radio (TRU2).

11. Véhicule (VH1) selon la revendication 10, dans lequel ledit véhicule (VH1) comprend un port (PT) et une connexion de données (DC) entre ledit port (PT) et ladite interface filaire (TRU3) et dans lequel ladite première interface radio (TRU1) est conçue pour passer dudit premier mode de fonctionnement audit second mode de fonctionnement, si ledit véhicule (VH1) est connecté par l'intermédiaire dudit port (PT) à une liaison de raccordement (BL) dudit réseau de communication radio (RCN1) .

12. Véhicule (VH1) selon la revendication 11, dans lequel ledit véhicule (VH1) est un véhicule électrique, dans lequel ledit port (PT) est intégré à un port de charge (CP) dudit véhicule électrique, et dans lequel ladite première interface radio (TRU1) est adaptée audit passage dudit premier mode de fonctionnement audit second mode de fonctionnement, si ledit véhicule électrique est connecté par l'intermédiaire dudit port de charge (CP) à une station de charge (PBU).

13. Véhicule (VH, VH1) selon l'une quelconque des revendications 9 à 12, dans lequel ledit véhicule (VH, VH1) est une automobile.

14. Véhicule (VH, VH1) selon la revendication 13, dans lequel ladite automobile est une voiture, un bus ou un camion.
